# EUROPEAN PATENT SPECIFICATION

(11) **EP 3 869 733 B1**
(45) Date of publication and mention of the grant of the patent: **10.07.2024**
(21) Application number: 21162867.2
(22) Date of filing: 07.04.2016
(51) Int. Cl.: H04L 9/32, G06F 21/41, G06F 21/30, H04L 9/40

(54) **TOKENIZATION OF CO-NETWORK ACCOUNTS**
TOKENISIERUNG VON CO-NETZWERK-KONTEN
TOKÉNISATION DE COMPTES DE RÉSEAUX COORDONNÉS

(43) Date of publication of application: 25.08.2021
(62) Divisional of application: 16898118.1
(73) Proprietor: Visa International Service Association, San Francisco, CA 94128-8999 (US)
(72) Inventor: WONG, Erick, Menlo Park, California 94025 (US)
(74) Representative: EIP

(56) References cited:
- US-A1- 2015 046 338
- US-A1- 2015 319 158
- US-A1- 2016 028 550
- "Payment Tokenisation Specification Technical Framework", 31 March 2014 (2014-03-31), XP055193899, Retrieved from the Internet <URL:https://www.emvco.com/specifications.aspx?id=263> [retrieved on 20150605]

## Description

### TECHNICAL FIELD

The present application relates to methods, systems, and devices for tokenization of co-network accounts.

### BACKGROUND

User devices (e.g. mobile communication devices, tablets, laptops, etc.) are used more and more to conduct transactions using user accounts. A user account may be provisioned on the user device thereby allowing the user device to initiate transactions (e.g. payment transactions) with transacting entities.

A user account may be associated with a transaction processing network. During provisioning of the account on the user device, the transaction processing network may perform an identification and verification process to ensure that the user requesting the account provisioning is the rightful user of the account. For example, the transaction processing network may send a security question to the user and receive an answer from the user. Accordingly, the user interaction is often required during provisioning of user accounts for improved security.

There exist accounts that are associated with more than one transaction processing networks. During provisioning of such accounts on a user device, all transaction processing networks associated with the account need to be identified so that each transaction processing network may perform their own identification and verification process. Thus, provisioning of such accounts may be burdensome on the user.

US 2015/046338 A1 discloses multi-network tokenization processing. US 2015/319158 A1 discloses a system and method for token domain control.

Embodiments of the invention address these and other problems, individually and collectively.

### SUMMARY

According to a first aspect of the invention there is provided a method for provisioning a user account, as defined by appended claim 1. According to a second aspect of the invention there is provided a token requestor computer, as defined by appended claim 4.

The present disclosure relates generally to tokenization of a co-network account. A co-network account, as used herein, refers to an account that can be used in connection with transactions processed by multiple transaction processing networks. For example, a co-network account may be associated with a first transaction processing network (e.g. Visa) and a second transaction processing network (e.g. Interac) for processing transactions initiated using the co-network account. When the user (e.g. account holder of the co-network account) wishes to provision the co-network account onto his user device (e.g. mobile communication device) with tokenized information, the user needs two tokens: a first token associated with the first transaction processing network and a second token associated with the second transaction processing network. Embodiments provision the second token, after provisioning the first token, without requesting the user to re-authenticate themselves for the provisioning of the second token. That is, embodiments use the authentication result generated during the provisioning of the first token for the provisioning of the second token. Embodiments automatically provision multiple payment tokens on a user device upon determining that the account is associated with more than one transaction processing networks (e.g. the account is a co-network account).

Embodiments provide a method comprising receiving, at a server computer of a first transaction processing network, a token provisioning request message from a token requestor. The token provisioning request message includes an account identifier. In some embodiments, an account identified by the account identifier is a co-network account. The method further includes determining, by the server computer, a second transaction processing network associated with the account identifier. The method also includes performing, by the server computer, an authentication process with a user based on determining the second transaction processing network associated with the account identifier. The method further includes generating, by the server computer, a first token associated with the account identifier and sending, by the server computer, the first token and result of the authentication process to the token requestor. The token requestor requests a second token for the account identifier from the second transaction processing network associated with the account identifier. In some embodiments, the first token and the second token are provisioned on a user device of the user.

According to various embodiments, the method includes informing the token requestor of the second transaction processing network upon determining the second transaction processing network. The method may also include sending a provisioning request message to an authorizing computer to request authorization prior to generating the first token. The provisioning request message may include the account identifier and the result of the authentication process. In some embodiments, the method may include determining, prior to generating the first token, that an account identified by the account identifier is eligible for provisioning.

A method is provided including sending, by a token requestor computer, a first token request message to a first transaction processing network. The first token request message includes an account identifier. The method also includes receiving, by the token requestor computer, a message from the first transaction processing network indicating that the account identifier is associated with a second transaction processing network. The method further includes receiving, by the token requestor computer, a first token from the first transaction processing network. The method also includes sending, by the token requestor computer, a second token request message to the second transaction network, and receiving, by the token requestor computer, a second token from the second transaction processing network. The first token and the second token are provisioned on a user device of a user of an account identified by the account identifier.

In some embodiments, the second token request message may include the account identifier and the first token. The method also includes receiving, by the token requestor computer, a result of an authentication process performed by the first transaction processing network. The second token request message includes the account identifier and the result of the authentication process performed by the first transaction processing network. The method may also include receiving, by the token requestor computer, the account identifier from a user of an account associated with the account identifier prior to sending the first token request message.

Embodiments may also provide a system including one or more processors; and a non-transitory computer readable storage medium communicatively coupled with the one or more processors. The readable storage medium comprises code, executable by the one or more processors, to implement the above-described methods.

The foregoing, together with other features and embodiments will become more apparent upon referring to the following specification, claims, and accompanying drawings.

### BRIEF DESCRIPTION OF THE DRAWINGS

FIG. 1 illustrates an exemplary co-network identification card associated with a co-network account.
FIG. 2 illustrates a transaction processing environment that manages provisioning of a co-network account on a user device.
FIG. 3 illustrates an transaction using one of the multiple tokens associated with a co-network account provisioned on a user device.
FIG. 4 a block diagram of an exemplary transaction processing network computer.
FIG. 5 is a block diagram of a computer apparatus that may be used to implement embodiments disclosed herein.

### DETAILED DESCRIPTION

In the following description, for the purposes of explanation, specific details are set forth in order to provide a thorough understanding of embodiments of the invention. However, it will be apparent that various embodiments may be practiced without these specific details. For example, circuits, systems, algorithms, structures, techniques, networks, processes, and other components may be shown as components in block diagram form in order not to obscure the embodiments in unnecessary detail.

It is to be understood that embodiments of the invention may include more or fewer than the components shown individually in a diagram. The figures and description are not intended to be restrictive.

Also, it is noted that individual embodiments may be described as a process which is depicted as a flowchart, a flow diagram, a data flow diagram, a structure diagram, or a block diagram. Although a flowchart may describe the operations as a sequential process, many of the operations can be performed in parallel or concurrently. In addition, the order of the operations may be re-arranged. A process is terminated when its operations are completed, but could have additional steps not included in a figure. A process may correspond to a method, a function, a procedure, a subroutine, a subprogram, etc. When a process corresponds to a function, its termination can correspond to a return of the function to the calling function or the main function.

The present disclosure relates generally to tokenization of a co-network account. A co-network account, as used herein, refers to an account that can be used in connection with transactions processed by multiple networks. For example, a co-network account may be associated with a first transaction processing network (e.g. VISA) and a second transaction processing network (e.g. Interac) for processing transactions initiated using the co-network account. When the user (e.g. account holder of the co-network account) wishes to provision the co-network account onto his user device (e.g. mobile communication device), the user needs two tokens: a first token associated with the first transaction processing network and a second token associated with the second transaction processing network. Embodiments provision the second token, after provisioning the first token, without requesting the user to re-authenticate themselves during the provisioning of the second token. That is, embodiments use the authentication result generated during the provisioning of the first token for the provisioning of the second token. Embodiments automatically provision multiple payment tokens on the user's mobile communication device upon determining that the account is associated with more than one transaction processing networks (e.g. the account is a co-network account).

Although many of the specific examples relate to tokens for payments, it is understood that embodiments of the invention can be used where any two transaction processing networks are used. For example, a corporation may operate an authorizing computer system, and may operate different networks that can allow access to different locations of the corporation (e.g., a building in Texas and a building in California). The locations may require respectively different tokens to access the systems, and these tokens may be based on a single real employee account identifier. Tokens for these different locations may be provisioned to a user device in a similar manner as described below with respect to tokens that are used with financial transactions.

In yet other embodiments, tokens may be used to access certain types of data from different data providers (e.g., credit agencies, governmental agencies, etc.). Tokens for these different data providers may be provisioned to a user device in a similar manner as described below with respect to tokens that are used with financial transactions.

Before discussing specific embodiments and examples, some descriptions of terms used herein are provided below.

A "server computer" may typically be a powerful computer or cluster of computers. For example, the server computer can be a large mainframe, a minicomputer cluster, or a group of servers functioning as a unit. In one example, a server computer may be a database server coupled to a Web server. A server computer may also be a cloud based or non-cloud based server implementation. Data transfer and other communications between components such as computers may occur via any suitable wired or wireless network, such as the Internet or private networks.

An "account holder" may hold an account. An "account holder" may include an individual or an entity that uses a system. An account holder may be associated with one or more accounts and/or user devices. In some cases, the account holder may also be referred to as a user or a consumer.

An "authorizing entity" (e.g. an issuer) can include an entity that authorizes a request. In some embodiments, an authorizing entity is an issuer that issues an account. The account (which may be associated with one or more user devices) may refer to any suitable account including payment accounts (e.g. a credit card account, a checking account, a savings account, a merchant account assigned to a consumer, a prepaid account, etc.), an employment account, an online account (e.g. email account, database subscription account, etc.).

An "issuer" may typically refer to a business entity (e.g., a bank) that maintains financial accounts for a user and often issues a credit or debit card to the user. An issuer can include a payment account issuer. The issuer may be responsible to make a credit limit available to account holders and may also be responsible for sending payments to merchants for purchases made with payment accounts issued by the issuer. The issuer may authorize a requested load amount to be uploaded to a user device. The issuer may operate an "authorization computer" to perform the foregoing actions.

A "transacting party" is an entity that conducts a transaction. It can be an entity that engages in transactions and can sell goods or services, or provides access to goods or services. For example, a transacting party may include a merchant.

A "transaction processing network" may refer to a computer or a network of computers that processes transactions. In some embodiments, the transaction processing network can be in an electronic system used to accept, transmit, or process transactions made by user devices for money, goods, services or access to locations or data. The transaction processing network may transfer information and funds among issuers, acquirers, transacting parties, and users. An example of the transaction processing network may include a payment processing server computer such as VisaNet^{™}, operated by Visa^{®}. Payment processing server computers such as VisaNet^{™} are able to process credit card transactions, debit card transactions, and other types of commercial transactions. VisaNet^{™}, in particular includes a Visa Integrated Payments (VIP) system which processes authorization requests and a Base II system which performs clearing and settlement services. In other embodiments, a transaction processing network can be a collection of computers that can allow access to a person seeking to access a particular location. In yet other embodiments, a transaction processing network can be a collection of computers that can allow access to specific types of data (e.g., governmental agencies).

A "user device" may refer to any device that may be used to conduct a financial transaction, such as to provide payment information to a merchant. A user device may be in any suitable form. For example, suitable user devices may be hand-held and compact so that they can fit into a consumer's wallet and/or pocket (e.g., pocket-sized). They may include smart cards, magnetic stripe cards, keychain devices (such as the Speedpass^{™} commercially available from Exxon-Mobil Corp.), etc. Other examples of user devices include cellular phones, personal digital assistants (PDAs), pagers, payment cards, security cards, access cards, smart media, transponders, 2-D barcodes, an electronic or digital wallet, wearable devices such as smart watches, fitness bands, ankle bracelets, rings, earrings, and the like. If the user device is in the form of a debit, credit, or smartcard, the user device may also optionally have features such as magnetic stripes. Such devices can operate in either a contact or contactless mode. In some embodiments, the user device may include a mobile device comprising any electronic device that may be transported and operated by a user, which may also provide remote communication capabilities to a network. Examples of remote communication capabilities include using a mobile phone (wireless) network, wireless data network (e.g. 3G, 4G or similar networks), Wi-Fi, Wi-Max, or any other communication medium that may provide access to a network such as the Internet or a private network. Examples of mobile devices include mobile phones (e.g. cellular phones), PDAs, tablet computers, net books, laptop computers, personal music players, hand-held specialized readers, etc. In some embodiments, the user device may include a stand-alone computer for conducting e-commerce transactions. Yet it other embodiments, the user device may include a vehicle, such as a car or a motorcycle having a processor and a memory storing payment information of the user.

A "token" may be a substitute for credential information. In some embodiments, a token may include an identifier for a payment account that is a substitute for an account identifier, such as a primary account number (PAN). For example, a token may include a series of numeric and/or alphanumeric characters that may be used as a substitute for an original account identifier. For example, a token "4900 0000 0000 0001" may be used in place of a PAN "4147 0900 0000 1234." In some embodiments, a token may be "format preserving" and may have a numeric format that conforms to the account identifiers used in existing payment processing networks (e.g., ISO 8583 financial transaction message format). In some embodiments, a token may be used in place of a PAN to initiate, authorize, settle or resolve a payment transaction or represent the original credential in other systems where the original credential would typically be provided. In some embodiments, a token value may be generated such that the recovery of the original PAN or other account identifier from the token value may not be computationally derived. Further, in some embodiments, the token format may be configured to allow the entity receiving the token to identify it as a token and recognize the entity that issued the token.

A "token service provider" may refer to an entity including one or more server computers that generates, processes and maintains tokens. The token service provider may include or be in communication with a token vault where the generated tokens are stored. Specifically, the token vault may maintain one-to-one mapping between a token and a primary account number (PAN) represented by the token.

A "token vault" may refer to a repository that maintains established token-to-PAN mappings. According to various embodiments, the token vault may also maintain other attributes of a token requestor that may be determined at the time of registration and that may be used by the token service provider to apply domain restrictions or other controls during transaction processing. In some embodiments, the token vault may be provided as a part of the token service provider. Alternatively, the token vault may be a remote repository accessible by the token service provider. The token vault, due to the sensitive nature of the data mappings that are stored and managed in it, may be protected by strong underlying physical and logical security.

"Tokenization" is a process by which data is replaced with substitute data. For example, a payment account identifier (e.g., a primary account number (PAN)) may be tokenized by replacing the primary account identifier with a substitute number (e.g. a token) that may be associated with the payment account identifier. Further, tokenization may be applied to any other-information which may be replaced with a substitute value (i.e., token). Tokenization may be used to enhance transaction efficiency, improve transaction security, increase service transparency, or to provide a method for third-party enablement.

A "co-network account" may refer to an account that is associated with (e.g. that can be used in connection with transactions processed by) two or more transaction processing networks. A co-network account may be associated with a co-network card, such as a co-network debit card.

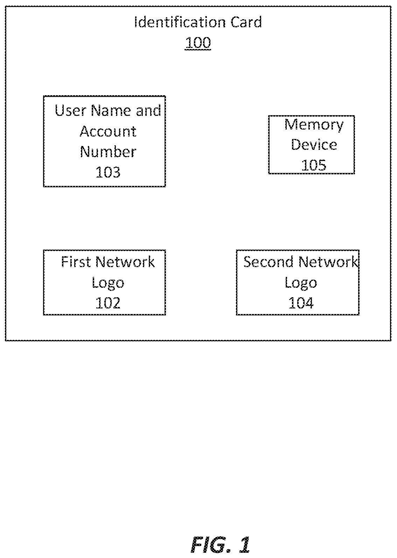

FIG. 1 illustrates an exemplary co-network identification card 100 associated with a co-network account, according to some embodiments of the invention. The co-network identification card 100 may be used to conduct transactions such as payment transactions to purchase goods or services, or access transactions to gain access to physical locations (e.g. a building) or to gain access to data stored at a virtual location (e.g. database supervised by a government agency). The co-network identification card 100 may show/display the user name and the account number 103. The co-network identification card 100 may also include a memory device 105, such as a memory chip, that may be used to store data and/or to conduct contactless transactions. The exemplary co-network identification card 100 illustrated in FIG. 1 may have access to a first transaction processing network (e.g. the *Interac* network) and a second transaction processing network (e.g. the VISA network) for payments that come from the co-network account. Both the logo 102 of the first transaction processing network and the logo 104 of the second transaction processing network may be displayed on the front of the co-network identification card 100. While payments come directly from the co-network account, the transactions may take place over the first transaction processing network or the second transaction processing network depending on the type of transaction or dependent on user's selection.

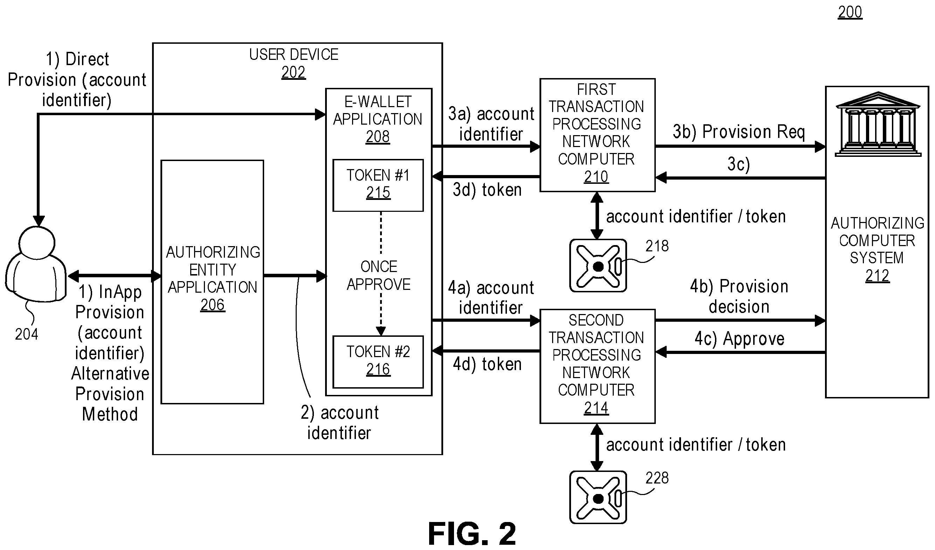

FIG. 2 illustrates a transaction processing environment 200 that manages provisioning of a co-network account on a user device 202, according to some embodiments of the present invention. FIG. 2 illustrates functional elements of a transaction processing environment according to one embodiment of the present invention. It is to be understood that embodiments of the invention may include more than one of the components shown individually in FIG. 2. Additionally, some embodiments of the invention may include fewer than all of the components shown in FIG. 2.

Transaction processing environment 200 may include an account holder 204, a user device 202 storing an application 206 provided by an authorizing entity and an application provided by an e-wallet provider (e.g. e-wallet application) 208, a first transaction processing network computer 210, a second transaction processing network computer 214, and an authorizing computer system 212 associated with an authorizing entity. The various computer systems may be configured to communicate in any suitable manner using any suitable communication network. Although the entities are shown as coupled to particular entities, the entities may be configured to communicate through any other suitable interfaces and some entities may be removed and/or added to the system depending on the configuration of the system.

The first transaction processing network computer 210 and the second transaction processing network computer 214 can include, respectively, data processing subsystems, networks, and operations used to support and deliver authorization services, exception file services, and clearing and settlement services. For example, the first transaction processing network computer 210 or the second transaction processing network computer 214 can comprise a server computer and databases of information.

In some embodiments, the first transaction processing network computer 210 or the second transaction processing network computer 214 can be implemented as a payment processing network. An exemplary payment processing network may include, for example, VisaNet^{™}. Payment processing networks such as VisaNet^{™} are able to process credit card transactions, debit card transactions, and other types of commercial transactions. VisaNet^{™}, in particular, includes a VIP system (Visa Integrated Payments system) which processes authorization requests and a Base II system which performs clearing and settlement services. The first transaction processing network computer 210 or the second transaction processing network computer 214 can use any suitable wired or wireless network, including the Internet. Among other functions, the first transaction processing network computer 210 or the second transaction processing network computer 214 may be responsible for ensuring that a user is authorized to conduct a transaction (via an authentication process), confirm the identity of a party to a transaction (e.g., via receipt of a personal identification number), confirm a sufficient balance or credit line to permit a purchase, or reconcile the amount of a purchase with the consumer's account (via entering a record of the transaction amount, date, etc.).

The first transaction processing network computer 210 and/or the second transaction processing network computer 214 may also function as a token service provider. That is, the first transaction processing network computer 210 and/or the second transaction processing network computer 214 may include one or more server computers that generates, processes and maintains tokens. The first transaction processing network computer 210 and/or the second transaction processing network computer 214 may include or be in communication with a token vault 218, 228 where the generated tokens are stored. Specifically, the token vault may maintain one-to-one mapping between a token and a primary account number (PAN) represented by the token.

In some embodiments, the user (e.g. the account holder) 204 has a co-network account that the user wishes to provision on the user device 202. The user 204 sends the provisioning request using the authorizing entity application 206 or the e-wallet application 208 stored on the user device by providing an account identifier (e.g. a primary account number (PAN)) for the co-network account to either one of these applications (step 1). If the user 204 provides the account identifier to the authorizing entity application 206 (e.g. the user logs in to the authorizing entity application 206 and enters the account identifier using the physical or virtual keypad of the user device 202), the authorizing entity application 206 may then pass the account identifier to the e-wallet application 208 (step 2). Once the e-wallet application receives the account identifier from either the user 204 or the authorizing entity application 206, the e-wallet application 208 generates and transmits a first provisioning request to the first transaction processing network computer 210 (step 3a). The provisioning request may also be referred as a token request, as the account is provisioned on the user device using a token.

The first transaction processing network computer 210 may analyze the request to retrieve the account identifier. Once the first transaction processing network computer 210 retrieves the account identifier, the first transaction processing network computer 210 may determine (1) whether the account identifier can be tokenized, and (2) whether the account identifier is associated with a co-network account. For example, the first transaction processing network computer 210 may determine a second transaction processing network computer 214 associated with the account identifier. For example, the first transaction processing network computer 210 may query a database or an issuer of the account to determine that the account identifier is associated with a co-network account and/or that the second transaction processing network computer 214 is associated with the account identifier. In some embodiments, the first transaction processing network computer 210 notifies the e-wallet application 208 that the account identifier is associated with another transaction processing network (e.g. with the second transaction processing network computer 214).

The first transaction processing network computer 210 initiates an authentication process with the user 204 to ensure that the user 204 is the authorized user of the account identified by the account identifier provided in the first provisioning request. For example, the first transaction processing network computer 210 may perform one or more of identification and verification (ID&V) methods with the user 204. Examples of ID&V methods may include, but are not limited to, an account verification message, a risk score based on assessment of the primary account number (PAN) and use of one time password by the issuer or its agent to verify the account holder. Exemplary ID&V methods may be performed using information such as a user signature, a password, an offline or online personal identification number (PIN), an offline or online enciphered PIN, a combination of offline PIN and signature, a combination of offline enciphered PIN and signature, user biometrics (e.g. voice recognition, fingerprint matching, etc.), a pattern, a glyph, knowledge-based challenge-responses, hardware tokens (multiple solution options), one time passwords (OTPs) with limited use, software tokens, two-channel authentication processes (e.g., via phone), etc.

Upon successful completion of the authentication process, the first transaction processing network computer 210 may send the first provisioning request to the authorizing computer system 212 (step 3b). In some embodiments, the first transaction processing network computer 210 may also send the result of the authentication process to the authorizing computer system 212. The authorizing computer system 212 may approve the tokenization of the account identified by the account identifier provided in the first provisioning request. The authorizing computer system 212 may return the provisioning decision (e.g. the provisioning authorization) to the first transaction processing network computer 210 (step 3c).

The first transaction processing network computer 210 may interact with a first token vault 218 to generate and store a first token 215 associated with the account identifier provided in the first provisioning request. The first transaction processing network computer 210 may store a mapping between the first token 215 and the account identifier in the first token vault 218. The first transaction processing network computer 210 then transmits the first token 215 to the e-wallet application 208 (step 3d). The e-wallet application 208 may store the first token 215 at a secure storage of the user device 202 that is accessible by the e-wallet application 208. Accordingly, the first token 215 is provisioned on the user device 202. The first transaction processing network computer 210 also provides the authentication process to the e-wallet application 208.

As explained above, the e-wallet application 208 is notified by the first transaction processing network computer 210 that the account identifier is also associated with the second transaction processing network computer 214. Thus, when the first token 215 is successfully provisioned on the user device 202 and/or is activated upon use, the e-wallet application 208 may automatically generate and transmit a second provisioning request to the second transaction processing network computer 214 (step 4a). The second provisioning request includes the account identifier (e.g. the same identifier provided in the first provisioning request). The second provisioning request also includes the result of the authentication process performed by the first transaction processing network computer 210 and provided to the e-wallet application 208. The second provisioning request may also include an indication that a token (i.e. the first token 215) has already been generated for this account. The second transaction processing network may verify the result of the authentication process to ensure that the received data is indeed a valid result of the authentication process from the first processing network. The verification may be performed by the second transaction processing network or by the issuers enabled by the second transaction processing network.

The second transaction processing network computer 214 may transmit the second provisioning request to the authorizing computer system 212 (step 4b). The second provisioning request may include one or more of the account identifier, the result of the authentication performed by the first transaction processing network computer 210, an indicator that a token has been previously authorized and generated for this account, etc. In some embodiments, the authorizing computer system 212 may independently determine whether the authorizing computer system 212 has already approved provisioning of the account identified by the account identifier. If the authorizing computer system 212 determines that it already approved the provisioning of the account, the authorizing computer system 212 may return the provisioning decision (e.g. the provisioning authorization) to the second transaction processing network computer 214 (step 4c). In other embodiments, the authorizing computer 212 may approve the provisioning of the account via the second transaction processing network computer 214 based on the information provided in the second provisioning request. The authorizing computer system 212 may return the provisioning decision (e.g. the provisioning authorization) to the second transaction processing network computer 214 (step 4c).

The second transaction processing network computer 214 may interact with a second token vault 228 to generate and store a second token 216 associated with the account identifier provided in the second provisioning request. The second transaction processing network computer 214 may store a mapping between the second token 216 and the account identifier in the second token vault 228. The second transaction processing network computer 214 then transmits the second token 216 to the e-wallet application 208 (step 4d). The e-wallet application 208 may store the second token 216 at a secure storage of the user device 202 that is accessible by the e-wallet application 208. Accordingly, the second token 216 is provisioned on the user device 202.

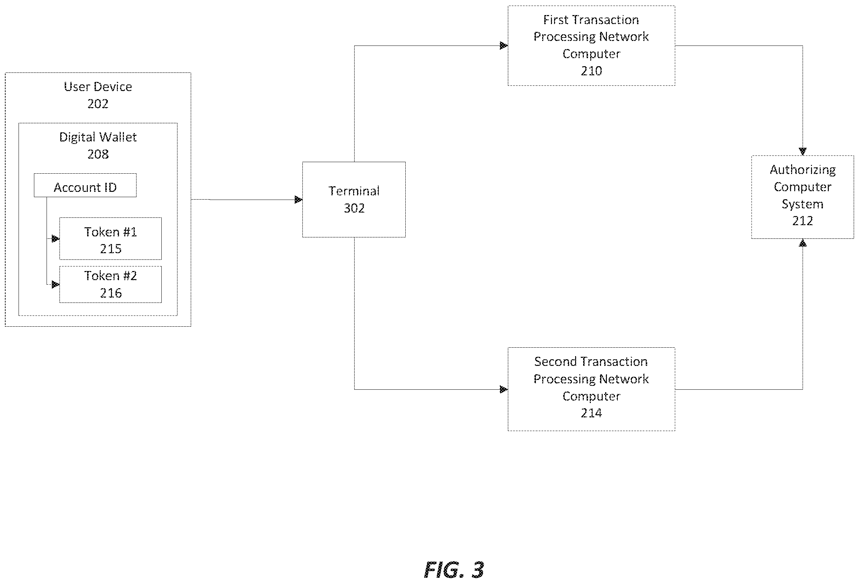

FIG. 3 illustrates a transaction using one of the multiple tokens associated with a co-network account provisioned on a user device. FIG. 3 provides a useful example for understanding the invention that is outside the subject-matter of the appended claims. In the exemplary transaction illustrated in FIG. 3, the user 204 may initiate a transaction using the user device 202 at a terminal 302. For example, the transaction may be for the purchase of a good or a service at a terminal (e.g. a point of sale (POS) device) of a transacting entity (e.g. a merchant) or the transaction may be to withdraw/transfer money from the co-network account of the user 204 at a banking terminal (e.g. ATM). The transaction may be initiated when the user 204 presents his or her user device 202 to the terminal 302. The user 204 may be asked to choose one of the tokens 212, 216 that are stored on the user device 202. For example, when the user 204 places the user device 202 at the proximity of the terminal 302, a screen prompt may be displayed on the user device 202 requiring the user 204 to select one of the first token 215 or the second token 216 associated with the co-network account. Alternatively, the user 204 may select one of the first token 215 or the second token 216 associated with the co-network account prior to placing the user device 202 at the proximity of the terminal 302 to initiate the transaction. For example, the user 204 may select the first token 215 for the exemplary transaction.

Depending on the token received at the terminal 302, the transacting entity (e.g. merchant, ATM owner, bank, etc.) associated with the terminal 302 may determine the transaction processing network (e.g. the first transaction processing network 210 or the second transaction processing network 214) associated with the received token. In the exemplary transaction discussed above, the transacting entity may determine that the transaction should be processed by the first transaction processing network computer 210 upon receiving the first token 215. The transacting entity associated with the terminal 302 may transmit transaction information (e.g. the received token, description of the goods or services included in the transaction, transaction amount, etc.). in an authorization request message to the first transaction processing network 210.

An authorization request message may be protected using a secure encryption method (e.g., 128-bit SSL or equivalent) in order to prevent data from being compromised. In one example, the authorization request message is a standardized interchange message such as an International Organization for Standardization (ISO) 8583 message. An ISO 8583 message includes a message type indicator; one or more bitmaps indicating which data elements are present in the message, and data elements of the message. The authorization request message may comprise routing information as part of or in addition to the interchange message. As part of generating the authorization request message, the transacting entity may communicate with a database which stores data such as data regarding the account owner, the payment device, or the account owner's transaction history with the transacting entity.

The first transaction processing network 210 may receive the authorization request message and may exchange the received token (e.g. the first token 215) with the corresponding identifier (e.g. account number) associated with the co-network account. The first transaction processing network 210 may then determine an authorizing entity capable of authorizing transactions initiated using the co-network account of the account holder 204. For example, the authorizing entity may be the issuer of the co-network account of the account holder 204. The first transaction processing network 210 may then forward the authorization request message to the authorizing computer system 212 for authorization of the transaction. Any number of additional processes including fraud analysis, authentication, risk analysis, and/or other actions may be performed by the first transaction processing network 210 (or any of the other computers associated with the authorization request message).

The authorizing computer system 212 receives the authorization request message and determines whether the transaction should be authorized. The authorizing computer system 212 may determine the account associated with the authorization request message, compare an account value or credit available in the account to the transaction amount, perform any number of fraud checks or risk analysis processes, and/or perform any other relevant actions to determine an appropriate authorization decision.

The authorizing computer system 212 may determine an authorization decision approving or declining the transaction and may generate an authorization response message including the authorization decision. The authorizing computer system 212 may send the authorization response message to the first transaction processing network 210 for completion and processing of the transaction.

The first transaction processing network 210 may receive the authorization response message, log the authorization decision for settlement and clearance purposes, and send the authorization response message to the transacting entity terminal 302. The transacting entity terminal 302 (associated with a transacting entity computer system) receives the authorization response message and completes the transaction based on the authorization decision of the authorization response message. For example, the transacting entity may provide a good or service to the user 204 if the authorization response message includes an indication of an accepted transaction and may decline to provide a good or service to the user 204 if the authorization response message includes an indication of a declined transaction.

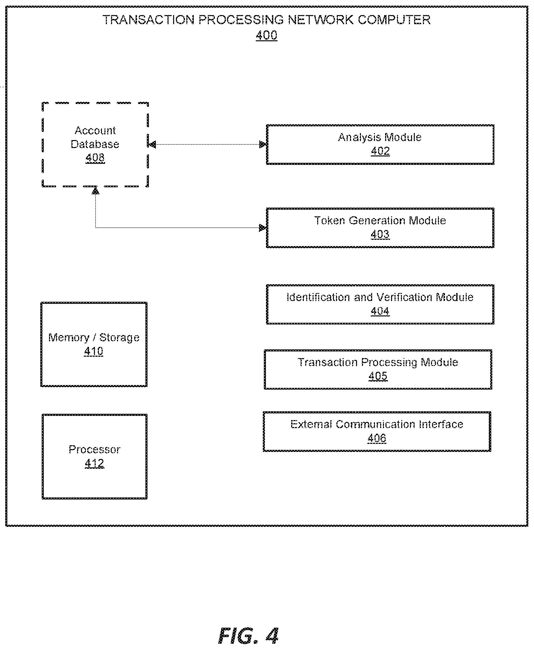

FIG. 4 illustrates the components of an exemplary transaction processing network computer 400. FIG. 4 provides a useful example for understanding the invention that is outside the subject-matter of the appended claims. The transaction processing network computer 400 may include an analysis module 402, a token generation module 403, an identification and verification module 404, a transaction processing module 405, an external communication interface 406, an account database 408, a memory/storage 410 and a processor 412.

The account database 408 may store information associated with user accounts. For example, an account identifier (e.g. account number), a token corresponding to the account identifier, user identifying information (e.g. user name, address, alias, social security number, etc.), security codes, etc. associated with an account may be stored in connection with that account on the database 408. Even though the account database 408 is illustrated as a part of the transaction processing network computer 400 in FIG. 4, one of ordinary skill in the art will appreciate that the account database 408 may be external to and accessible by the transaction processing network computer 400. For example, the account database 408 may be stored at a token vault 218, 228 illustrated in FIG. 2.

The transaction processing network computer 400 may also function as a tokenization server computer that generates tokens upon request. For example, when the transaction processing network computer 400 receives a token generation request message from a token requestor (as discussed above in connection with FIG. 2), the transaction processing network computer 400 may generate a token associated with an account identifier included in the token request message. The transaction processing network computer 400 may store a mapping between the generated token and the corresponding account identifier at the account database 408.

Transaction analysis module 402, working with processor 412 of the transaction processing network computer 400, may determine whether the account identified by the account identifying information provided in the token request message is allowed for tokenization (e.g. whether the account may be provisioned on a user device and/or may be used in a transaction). For example, the transaction analysis module 402, in conjunction with the processor 412, may determine whether the account is closed (e.g. deactivated). In such cases, the transaction processing network computer 400 may notify the token requestor that the account has been deactivated and cannot be provisioned (e.g. a token cannot be generated for the account identifier). The account may be restricted for use in connection with pre-determined types of transactions. For example, the account may be restricted for use with transaction based on transaction location, transaction value, transaction time, etc. In such cases, the transaction analysis module 402 and the processor 412 may inform the token generation module 403 of such restrictions so that restricted use token(s) may be generated for that account.

Transaction analysis module 402, working with processor 412 of the transaction processing network computer 400, may also determine that the account identified by the account identifying information provided in the token request message is a co-network account. For example, the transaction analysis module 402, working with processor 412 of the transaction processing network computer 400, may determine at least one additional transaction processing network associated with the account identifier.

Upon determining that the account is a co-network account, the transaction processing network computer 400 may initiate an authentication process with the user to ensure that the user is the authorized user of the co-network account identified by the account identifier provided in the token request message. For example, the identification and verification module 404 of the transaction processing network computer 400 may perform one or more of identification and verification methods with the user. As part of an ID&V method, the identification and verification module 404 may receive information such as a user signature, a password, an offline or online personal identification number (PIN), an offline or online enciphered PIN, a combination of offline PIN and signature, a combination of offline enciphered PIN and signature, user biometrics (e.g. voice recognition, fingerprint matching, etc.), a pattern, a glyph, knowledge-based challenge-responses, hardware tokens (multiple solution options), one time passwords (OTPs) with limited use, software tokens, two-channel authentication processes (e.g., via phone), etc. The identification and verification module 404 may use the received information to confirm that the token is requested for the intended user of the co-network account.

The token generation module 403 may generate the token in response to the token request message after the identification and verification module 404 confirms that the token is requested for the intended user of the co-network account. The transaction processing network computer 400 may return the generated token to the token requestor via the external communication interface 406.

When a user initiates a transaction with a transacting party, the computer operated by the transacting party generates a transaction authorization request message and sends the transaction authorization request message to the transaction processing network computer 400. The transaction processing network computer 400 may receive the transaction authorization request message via the external communication interface 406. The transaction authorization request message may include, among other information, a token. Upon receiving the transaction authorization request message, the transaction analysis module 402 of the transaction processing network computer 400, working in conjunction with the processor 412, may query the account database 408 to determine the account associated with the token included in the transaction authorization request message.

The transaction processing module 405 and the processor 412 may modify the transaction authorization request message to replace the token with the corresponding account information retrieved from the account database 408. The transaction processing module 405 and the processor 412 may then transmit the modified transaction authorization request message to the authorizing computer system. Upon receiving the transaction authorization request message, the authorizing computer system may process the transaction authorization request message and determine whether the request should be approved or declined. The authorizing computer system may provide a transaction authorization response message to the transaction processing network computer 400. The transaction processing network computer 400 may receive the transaction authorization response message via the external communication interface 406.

The transaction processing module 405 and the processor 412 of the transaction processing network computer 400 may modify the transaction authorization response message received from the authorizing computer system to replace the account identifier with the token. The transaction processing network computer 400 may send the transaction authorization response message (or the modified transaction authorization response message) to the transacting party.

The transaction processing network computer 400 may also include a system memory 410 comprising one or modules to generate and utilize electronic messages, and the data processor 412 for facilitating a transaction and the exchange of electronic messages. The account database 408 may be stored at the system memory 410.

Embodiments allow for provisioning of a co-network account on a user device. For accounts that are associated with more than one transaction processing network, embodiments allow provisioning multiple tokens based on the identification and verification result (e.g. authentication result) of one of the transaction processing networks. When a first token associated with a first transaction processing network is provisioned on the user device, the subsequent tokens associated with the remaining transaction processing networks may be automatically provisioned using the authentication result of the first transaction processing networks.

The various participants and elements described herein with reference to FIGS. 1-4 may operate one or more computer apparatuses to facilitate the functions described herein. Any of the elements in FIGS. 1-4, including any servers or databases, may use any suitable number of subsystems to facilitate the functions described herein.

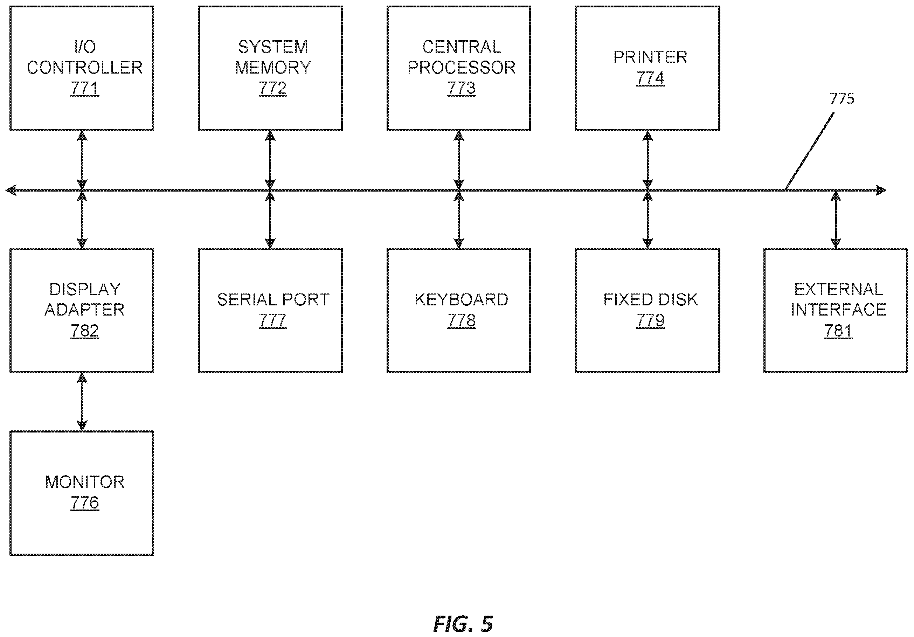

Examples of such subsystems or components are shown in FIG. 5. The subsystems shown in FIG. 5 are interconnected via a system bus 775. Additional subsystems such as a printer 774, keyboard 778, fixed disk 779 (or other memory comprising computer readable media), monitor 776, which is coupled to display adapter 782, and others are shown. Peripherals and input/output (I/O) devices, which couple to I/O controller 771 (which can be a processor or other suitable controller), can be connected to the computer system by any number of means known in the art, such as serial port 777. For example, serial port 777 or external interface 781 can be used to connect the computer apparatus to a wide area network such as the Internet, a mouse input device, or a scanner. The interconnection via system bus allows the central processor 773 to communicate with each subsystem and to control the execution of instructions from system memory 772 or the fixed disk 779, as well as the exchange of information between subsystems. The system memory 777 and/or the fixed disk 779 may embody a computer readable medium.

Embodiments of the invention are not limited to the above-described embodiments. For example, although separate functional blocks are shown for an issuer, payment processing network, and acquirer, some entities perform all of these functions and may be included in embodiments of invention.

It should be understood that the present invention as described above can be implemented in the form of control logic using computer software (stored in a tangible physical medium) in a modular or integrated manner. Based on the disclosure and teachings provided herein, a person of ordinary skill in the art will know and appreciate other ways and/or methods to implement the present invention using hardware and a combination of hardware and software.

Any of the software components or functions described in this application, may be implemented as software code to be executed by a processor using any suitable computer language such as, for example, Java, C++ or Perl using, for example, conventional or object-oriented techniques. The software code may be stored as a series of instructions, or commands on a computer readable medium, such as a random access memory (RAM), a read only memory (ROM), a magnetic medium such as a hard-drive or a floppy disk, or an optical medium such as a CD-ROM. Any such computer readable medium may reside on or within a single computational apparatus, and may be present on or within different computational apparatuses within a system or network.

The above description is illustrative and is not restrictive. Many variations of the invention will become apparent to those skilled in the art upon review of the disclosure. The scope of the invention should, therefore, be determined not with reference to the above description, but instead should be determined with reference to the pending claims along with their full scope or equivalents.

One or more features from any embodiment may be combined with one or more features of any other embodiment without departing from the scope of the invention.

A recitation of "a", "an" or "the" is intended to mean "one or more" unless specifically indicated to the contrary.

## Claims

1. A method for provisioning a user account, the method comprising:
sending (3a), by a token requestor computer (202), a first token request message to a first transaction processing network (210), wherein the first token request message includes an account identifier that identifies a user account associated with the first transaction processing network (210) and a second transaction processing network (214), such that transactions initiated using the account identifier are processed by one of the first transaction processing network (210) or the second transaction processing network (214);
receiving, by the token requestor computer (202), a message from the first transaction processing network (210) indicating that the account identifier is associated with the second transaction processing network (214);
receiving (3d), by the token requestor computer (202), a first token and a result of an authentication process performed by the first transaction processing network from the first transaction processing network;
sending (4a), by the token requestor computer (202), a second token request message to the second transaction processing network (214), the second token request message including the account identifier and the result of the authentication process; and
receiving (4d), by the token requestor computer (202), a second token from the second transaction processing network (214), wherein the second token is generated by the second transaction processing network based on the result of the authentication process performed by the first transaction processing network, and wherein the first token and the second token are provisioned on a user device of a user of a user account identified by the account identifier.

2. The method of claim 1, wherein the second token request message includes the first token.

3. The method of any preceding claim, further comprising:
receiving, by the token requestor computer, the account identifier from a user of an account associated with the account identifier prior to sending the first token request message.

4. A token requestor computer (202) comprising:
one or more processors; and
a non-transitory computer readable storage medium communicatively coupled to the one or more processors and comprising instructions which, when executed by the one or more processors, cause the token requestor computer (202) to perform the method of any of claims 1 to 3.

## Patentansprüche

1. Verfahren zur Bereitstellung eines Benutzerkontos, das Verfahren umfassend:
Senden (3a), durch einen Token-Anforderer-Computer (202), einer ersten Token-Anforderungsnachricht an ein erstes Transaktionsverarbeitungsnetzwerk (210), wobei die erste Token-Anforderungsnachricht eine Kontokennung beinhaltet, die ein Benutzerkonto identifiziert, das mit dem ersten Transaktionsverarbeitungsnetzwerk (210) und einem zweiten Transaktionsverarbeitungsnetzwerk (214) verbunden ist, sodass Transaktionen, die unter Verwendung der Kontokennung initiiert werden, von einem von dem ersten Transaktionsverarbeitungsnetzwerk (210) oder dem zweiten Transaktionsverarbeitungsnetzwerk (214) verarbeitet werden;
Empfangen, durch den Token-Anforderer-Computer (202), einer Nachricht von dem ersten Transaktionsverarbeitungsnetzwerk (210), die angibt, dass die Kontokennung mit dem zweiten Transaktionsverarbeitungsnetzwerk (214) verbunden ist;
Empfangen (3d), durch den Token-Anforderer-Computer (202), eines ersten Tokens und eines Ergebnisses eines durch das erste Transaktionsverarbeitungsnetzwerk durchgeführten Authentifizierungsprozesses von dem ersten Transaktionsverarbeitungsnetzwerk;
Senden (4a), durch den Token-Anforderer-Computer (202), einer zweiten Token-Anforderungsnachricht an das zweite Transaktionsverarbeitungsnetzwerk (214), wobei die zweite Token-Anforderungsnachricht die Kontokennung und das Ergebnis des Authentifizierungsprozesses beinhaltet; und
Empfangen (4d), durch den Token-Anforderer-Computer (202), eines zweiten Tokens von dem zweiten Transaktionsverarbeitungsnetzwerk (214), wobei das zweite Token durch das zweite Transaktionsverarbeitungsnetzwerk basierend auf dem Ergebnis des durch das erste Transaktionsverarbeitungsnetzwerk durchgeführten Authentifizierungsprozesses erzeugt wird, und wobei das erste Token und das zweite Token auf einem Benutzergerät eines Benutzers eines durch die Kontokennung identifizierten Benutzerkontos bereitgestellt werden wird.

2. Verfahren nach Anspruch 1, wobei die zweite Token-Anforderungsnachricht das erste Token beinhaltet.

3. Verfahren nach einem der vorhergehenden Ansprüche, ferner Folgendes umfassend:
Empfangen, durch den Token-Anforderer-Computer, der Kontokennung von einem Benutzer eines mit der Kontokennung verbundenen Kontos vor dem Senden der ersten Token-Anforderungsnachricht.

4. Token-Anforderer-Computer (202), umfassend:
einen oder mehrere Prozessoren; und
ein nichtflüchtiges computerlesbares Speichermedium, das kommunikativ mit dem einen oder den mehreren Prozessoren gekoppelt ist und Anweisungen umfasst, die, wenn sie durch den einen oder die mehreren Prozessoren ausgeführt werden, den Token-Anforderer-Computer (202) veranlassen, das Verfahren nach einem der Ansprüche 1 bis 3 durchzuführen.

## Revendications

1. Procédé pour l'approvisionnement d'un compte utilisateur, le procédé comprenant :
la réception (3a), par un ordinateur demandeur de jeton (202), d'un premier message de demande de jeton à un premier réseau de traitement de transaction (210), dans lequel le premier message de demande de jeton comprend un identificateur de compte qui identifie un compte utilisateur associé avec le premier réseau de traitement de transaction (210) et un deuxième réseau de traitement de transaction (214), de sorte que des transactions initiées à l'aide de l'identificateur de compte sont traitées par l'un du premier réseau de traitement de transaction (210) ou du deuxième réseau de traitement de transaction (214) ;
la réception, par l'ordinateur demandeur de jeton (202), d'un message provenant du premier réseau de traitement de transaction (210) indiquant que l'identificateur de compte est associé au deuxième réseau de traitement de transaction (214) ;
la réception (3d), par l'ordinateur demandeur de jeton (202), d'un premier jeton et d'un résultat d'un processus d'authentification exécuté par le premier réseau de traitement de transaction à partir du premier réseau de traitement de transaction ;
l'envoi (4a), par l'ordinateur demandeur de jeton (202), d'un deuxième message de demande de jeton au deuxième réseau de traitement de transaction (214), le deuxième message de demande de jeton comprenant l'identificateur de compte et le résultat du processus d'authentification ; et
la réception (4d), par l'ordinateur demandeur de jeton (202), d'un deuxième jeton provenant du deuxième réseau de traitement de transaction (214), dans lequel le deuxième jeton est généré par le deuxième réseau de traitement de transaction sur la base du résultat du processus d'authentification effectué par le premier réseau de traitement de transaction, et dans lequel le premier jeton et le deuxième jeton sont fournis sur un dispositif utilisateur d'un utilisateur d'un compte utilisateur identifié par l'identifiant de compte.

2. Procédé selon la revendication 1, dans lequel le deuxième message de demande de jeton comprend le premier jeton.

3. Procédé selon l'une quelconque des revendications précédentes, comprenant en outre :
la réception, par l'ordinateur demandeur de jeton, de l'identificateur de compte d'un utilisateur d'un compte associé à l'identificateur de compte avant l'envoi du premier message de demande de jeton.

4. Ordinateur demandeur de jeton (202) comprenant :
un ou plusieurs processeurs ; et
un support de stockage non transitoire lisible par ordinateur couplé en communication avec le ou les processeurs et comprenant des instructions qui, lorsqu'elles sont exécutées par le ou les processeurs, amènent l'ordinateur demandeur de jeton (202) à exécuter le procédé selon l'une quelconque des revendications 1 à 3.
